Europäisches Patentamt

(19) European Patent Office

Office européen des brevets

(11) Numéro de publication: **0 041 425**
**B1**

(12) **FASCICULE DE BREVET EUROPEEN**

(45) Date de publication du fascicule du brevet:
**15.02.84**

(21) Numéro de dépôt: **81400776.1**

(22) Date de dépôt: **18.05.81**

(51) Int. Cl.³: **E 02 B 11/00**

(54) **Procédé de réalisation de tranchées drainantes.**

(30) Priorité: **03.06.80 FR 8012296**

(43) Date de publication de la demande:
**09.12.81 Bulletin 81/49**

(45) Mention de la délivrance du brevet:
**15.02.84 Bulletin 84/7**

(84) Etats contractants désignés:
**BE CH DE FR GB LI NL**

(56) Documents cités:
**DE - A - 1 902 137**
**FR - A - 2 181 411**
**FR - A - 2 244 356**

**CIVIL ENGINEERING ASCE, vol. 44, nr. 4 avril 1974, New York, US, A. HEALY: "Prefabricated, fin underdrain promises faster soil drainage", pages 50-53**
**CIVIL ENGINEERING ASCE, vol. 46, mars 1976, Nr. 3, New York, US, R. SEEMEL: "Plastic filter fabrics challenging the conventional granular filter", pages 57-59**

(73) Titulaire: **SONDAGES INJECTIONS FORAGES "S.I.F." ENTREPRISE BACHY, 11, Avenue du Colonel Bonnet, F-75016 Paris (FR)**

(72) Inventeur: **Deniau, Alain Maurice, 3, Place Jean Giraudoux, F-94000 Créteil (FR)**

(74) Mandataire: **De Boisse, Louis, 37, Avenue Franklin D. Roosevelt, F-75008 Paris (FR)**

ACTORUM AG

Procédé de réalisation de tranchées drainantes

L'invention concerne un procédé de réalisation de tranchées drainantes, selon lequel on creuse une tranchée dans le sol, et on remplit la tranchée avec un matériau filtrant (connu, par exemple, des documents FR-A Nos 2244356 et 2181411).

Il est souvent nécessaire de s'affranchir de la présence de l'eau dans les sols, soit de façon provisoire pour faciliter la réalisation d'ouvrages enterrés, soit de façon définitive pour protéger des ouvrages existants contre les eaux souterraines ou pour en supprimer les effets nuisibles, en particulier du point de vue stabilité, sur les sols eux-mêmes.

Les tranchées drainantes (tranchées remplies d'un matériau filtrant perméable et équipées ou non en leur partie basse d'un drain tubulaire longitudinal) apporteraient, dans de nombreux cas, une réponse particulièrement bien adaptée aux problèmes posés si leur réalisation ne se heurtait pas très souvent à des difficultés techniquement ou économiquement difficilement surmontables dès qu'elles doivent pénétrer plus ou moins profondément dans le terrain aquifère.

On sait, en effet, réaliser de façon courante des tranchées drainantes de faible profondeur, de l'ordre du mètre, que l'on équipe d'un tube filtrant souple au fur et à mesure de l'ouverture de la tranchée. La rapidité des opérations, étant donné la faible dimension de l'ouvrage, permet d'équiper et de refermer la tranchée avant que les phénomènes d'éboulement des parois de l'excavation ne compromettent l'exécution même de l'ouvrage. C'est ainsi que sont mis en place les drains agricoles permettant l'assainissement par drainage des terres cultivables.

Si l'on désirait réaliser des tranchées plus profondes, il serait indispensable de mettre en place des dispositifs de blindage et de soutènement des parois complétés par des moyens d'exhaure des eaux d'infiltration dans la tranchée même, ou de rabattement de la nappe phréatique par des forages de pompage installés de part et d'autre du tracé de l'excavation, les ouvrages que l'on se propose d'exécuter étant par définition situés en terrain aquifère.

On connaît bien un procédé de réalisation de tranchées de grande profondeur qui permet de s'affranchir des sujétions très lourdes techniquement et économiquement que constituent les blindages, soutènements et pompages évoqués plus haut. Ce procédé consiste à réaliser l'excavation de la tranchée sous la protection d'une boue bentonitique, comme dans la technique bien connue d'exécution des parois moulées dans le sol.

Mais l'utilisation d'une boue bentonitique comme agent provisoire de soutènement des parois de l'excavation est fondamentalement incompatible avec l'équipement et le fonctionnement même de la tranchée drainante.

D'une part, en effet, l'effet de soutènement de la suspension bentonitique repose schématiquement sur la pénétration de cette boue dans le terrain au voisinage de l'excavation, plus ou moins profondément suivant la perméabilité de la formation, et la création d'une membrane étanche, ou cake, sur la paroi même de l'excavation. Ces deux phénomènes conjugués ne pourraient que s'opposer ultérieurement à la circulation de l'eau contenue dans le sol vers la tranchée drainante.

D'autre part, l'équipement même de la tranchée en tranchée drainante ne pourrait se faire en raison de la présence de la suspension bentonitique. Cet équipement est, en effet, principalement constitué par un remplissage de la tranchée par un matériau filtrant perméable (par exemple du gravier calibré), remplissage qui se trouverait totalement colmaté par la suspension au moment même de sa mise en place.

L'invention a donc pour but de fournir un procédé qui permet de réaliser des tranchées drainantes de grande profondeur sans nécessiter l'emploi d'un matériel compliqué à mettre en œuvre.

L'invention concerne un procédé de réalisation de tranchées drainantes selon lequel:

a) on creuse une tranchée dans le sol, et

b) on remplit la tranchée avec un matériau filtrant, caractérisé en ce qu'on effectue l'étape a tandis que la tranchée est remplie d'une boue pseudo-plastique dégradable, puis on effectue l'étape b en introduisant le matériau filtrant dans la tranchée remplie de boue.

Si on le désire, l'étape b peut être précédée de la mise en place, au fond de la tranchée, d'un tube de collecte et de drainage.

L'invention concerne aussi les tranchées drainantes réalisées par le procédé de l'invention.

La boue pseudo-plastique dégradable utilisée dans le procédé de l'invention est un produit connu qui est utilisé comme fluide de circulation dans la réalisation de forages. Cette boue est constituée d'une solution colloïdale d'un polymère naturel ou biopolymère qui se présente, au repos, sous la forme d'un gel. Cette boue se prépare facilement en dissolvant le polymère à l'état sec dans de l'eau (dosage de l'ordre de 5 à 10 parties de polymère pour 1 000 parties d'eau) et a les remarquables propriétés d'avoir un comportement pseudo-plastique (c'est-à-dire d'être fluidifiable par cisaillement) et d'être dégradable, c'est-à-dire de revenir à un état fluide (semblable à celui de l'eau) au bout d'un certain temps. Ce retour à l'état fluide s'opère par hydrolyse du polymère, soit par un phénomène de biodégradation enzymatique que l'on peut contrôler par l'adjonction d'inhibiteurs, soit par une action chimique volontaire. Les polymères naturels ou biopolymères convenant à la préparation de la boue pseudo-plastique dégradable sont, pour la plupart, des hétéropolysaccharides préparés à partir de graines de légumineuses et sont disponibles dans le commerce à partir de diverses sources. On peut citer, à titre d'exemples non limitatifs, le Rhodopol 23 vendu par la société Rhône-Poulenc, le Foragum HM vendu par la société Ceca S.A., et le Revert vendu par la société Johnson. On se reportera avantageusement aux notices d'emploi de ces produits pour avoir plus de détails quant à la préparation et à la dégradation de la boue pseudo-plastique.

Cette boue à consistance de gel permet d'excaver la tranchée sans risque d'éboulement ou d'effondrement des parois de la tranchée. En quelque sorte, cette boue joue le même rôle que la boue bentonitique employée dans l'excavation de tranchées destinées à recevoir du béton pour la réalisation de parois moulées dans le sol. Toutefois, la boue pseudo-plastique employée présente l'avantage de ne colmater ni le matériau filtrant mis en place dans la tranchée drainante ni les parois de la tranchée, étant dégradable en un résidu fluide semblable à l'eau. Son comportement pseudo-plastique (fluidifiable par cisaillement) fait, en outre, qu'elle ne gêne pas la mise en place du matériau filtrant, ni celle d'un tube de collecte et de drainage éventuel.

La nature du matériau filtrant utilisé n'est pas critique. On préfère à ce jour utiliser un gravier naturel calibré, roulé ou concassé, mais on pourrait employer aussi un matériau granulaire artificiel tel que des billes d'argile expansée, de verre, etc.

Au lieu de remplir la tranchée d'un matériau filtrant en vrac, on pourrait équiper la tranchée de panneaux drainants préfabriqués constitués, par exemple, de matériaux granulaires agglomérés (gravier calibré aggloméré, billes d'argile expansée agglomérées, etc.) ou de matériaux perméables dans leur masse (béton poreux ou tout matériau d'une porosité ouverte élevée).

On peut aussi envisager un remplissage composite combinant, par exemple, des panneaux drainants préfabriqués occupant la partie centrale de la tranchée et un matériau filtrant en vrac (tel que des graviers) venant remplir les espaces latéraux existants entre les panneaux et les parois de la tranchée.

Enfin, dans le cas de l'utilisation d'un matériau filtrant en vrac, on peut prévoir d'interposer une feuille poreuse, par exemple une nappe textile non tissée, entre le matériau filtrant en vrac, d'une part, et les parois et le fond de la tranchée, d'autre part, afin d'éviter que le terrain environnant ne vienne se mélanger avec le matériau filtrant et ne le colmate plus ou moins au bout d'un certain temps. L'emploi d'une telle feuille poreuse séparatrice permet aussi l'utilisation d'un gravier non calibré.

Le procédé de l'invention peut être mis en œuvre de façon continue ou discontinue.

La description qui va suivre en regard du dessin annexé donné à titre d'exemple non limitatif fera bien comprendre comment l'invention peut être réalisée, les particularités qui ressortent tant du dessin que du texte faisant, bien entendu, partie de ladite invention.

La fig. 1 est une vue schématique en coupe illustrant un mode de mise en œuvre en continu du procédé de l'invention, et

la fig. 2 est une vue schématique en coupe illustrant un mode de mise en œuvre discontinu du procédé de l'invention.

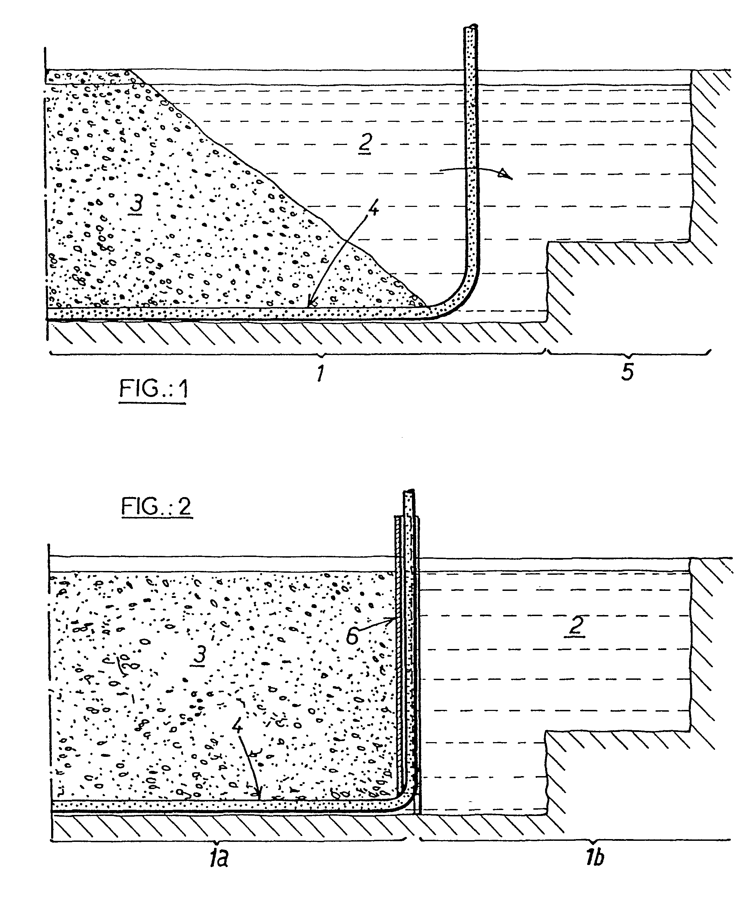

La fig. 1 illustre la réalisation en continu d'une tranchée drainante. Sur cette figure, on voit une tranchée 1 excavée en continu sous la protection d'une boue 2 pseudo-plastique dégradable ayant, en l'absence de cisaillement, la consistance d'un gel. Dès qu'une longueur de tranchée supérieure à la longueur correspondant au talus naturel du gravier filtrant devant remplir la tranchée est exécutée, on commence la mise en place des graviers filtrants 3, en général en déversant directement le gravier dans la boue remplissant la tranchée. Si, comme l'illustre la figure, on a choisi d'équiper également la tranchée d'un tube de drainage et collecte 4 servant de collecteur des eaux de drainage, ce tube est posé sur le fond de la tranchée avant déversement du matériau filtrant 3. Le tube 4 peut être constitué, par exemple, d'un tube souple ou semi-souple, en matière plastique, perforé sur tout ou partie de sa circonférence. L'excavation de la tranchée progresse en 5 tandis qu'on effectue le déversement des graviers 3 dans la portion de tranchée déjà excavée.

La durée de vie de la boue est réglée en fonction des différents paramètres l'influençant (pH de l'eau, composition chimique, température, etc.) de façon que la dégradation de la boue dans une zone donnée de la tranchée n'intervienne qu'après achèvement de l'équipement de la tranchée avec le tube de drainage et de son remplissage avec le matériau filtrant. Toute indication nécessaire à ce réglage de la durée de vie de la boue pourra être trouvée dans les notices afférentes aux polymères naturels ou biopolymères du commerce utilisés.

Une fois la boue dégradée (au bout d'un temps pouvant varier de quelques heures à quelques jours) en un résidu semblable à de l'eau, la tranchée drainante est prête à fonctionner.

La fig. 2 illustre une variante de mise en œuvre du procédé de l'invention selon laquelle la tranchée drainante est réalisée par tronçons successifs. Dans cette variante, on excave, sous la protection de la boue pseudo-plastique dégradable 2, un tronçon 1a de tranchée. Une fois le tronçon 1a excavé, on met en place le tube de drainage et de collecte 4, si on en utilise un, au fond du tronçon 1a, puis on pose un élément de coffrage provisoire 6 à l'extrémité du tronçon 1a, cet élément 6 servant à retenir les graviers filtrants d'une part, et à protéger le tube 4 d'autre part, ce dernier étant logé dans un renforcement ménagé dans le coffrage. On peut alors, après la pose du coffrage 6, déverser le gravier filtrant 3 dans le tronçon 1a de la tranchée.

Ensuite, le tronçon 1a de la tranchée drainante étant terminé, on excave le tronçon 1b de la tranchée sous boue pseudo-plastique dégradable, on déroule sur son fond le tube 4, on retire le coffrage 6 de l'extrémité du tronçon 1a pour le mettre à l'extrémité du tronçon 1b, on déverse le gravier 3 dans le tronçon 1b, et ainsi de suite jusqu'à achèvement de la tranchée drainante.

Bien entendu, au lieu de réaliser la tranchée drainante par tonçons successifs, on pourrait opérer par tronçons alternés, ainsi que cela sera évident pour l'homme de l'art. Toutefois, dans ce cas, on ne peut pas mettre en place de tubes de collecte et de drainage, tout au moins d'une façon simple.

Les caractéristiques géométriques de la tranchée drainante (longueur, profondeur, emplacement, etc.) doivent être adaptées aux conditions de topographie et de nature du terrain considéré en assurant dans tous les cas l'évacuation des eaux de drainage ainsi collectées.

L'invention est utile notamment pour la stabilisation par drainage des talus et pentes en équilibre limite, cas rencontré fréquemment lors de l'exécution des grands terrassements nécessités par la construction d'autoroutes, de voies de chemin de fer, de canaux, etc. Jusqu'à présent, cette stabilisation par drainage était réalisée à partir d'un réseau de forages légèrement remontants, en général exécutés depuis le flanc du terrain intéressé. On conçoit aisément que les ouvrages unidimensionnels que constituent les forages de drainage sont, en général, beaucoup moins efficaces qu'une ou plusieurs tranchées drainantes convenablement disposées coupant de façon continue le sol dont on se propose d'extraire l'eau pour le stabiliser, et cela d'autant plus si cette dernière se présente sous forme de circulation distribuée au hasard dans la masse du terrain.

Le perfectionnement que constitue la présente invention permet de réaliser de telles tranchées drainantes dans d'excellentes conditions d'économie et de résultat, quelle que soit la nature des terrains meubles rencontrés.

Il va de soi que les modes de réalisation décrits ne sont que des exemples et l'on pourrait les modifier notamment par substitution d'équivalents techniques, sans sortir pour cela du cadre de l'invention tel que défini par les revendications.

**Revendications**

1. Procédé de réalisation de tranchées drainantes selon lequel:

a) on creuse une tranchée (1) dans le sol, et

b) on remplit la tranchée avec un matériau filtrant (3), caractérisé en ce qu'on effectue l'étape a tandis que la tranchée est remplie d'une boue pseudo-plastique dégradable (2), puis on effectue l'étape b en introduisant le matériau filtrant dans la tranchée remplie de boue.

2. Procédé selon la revendication 1, caractérisé en ce que l'étape b est précédée de la mise en place, au fond de la tranchée (1), d'un tube de collecte et de drainage (4).

3. Procédé selon la revendication 1, caractérisé en ce que le matériau filtrant est un matériau en vrac (3).

4. Procédé selon la revendication 1, caractérisé en ce que le matériau filtrant est constitué par des panneaux préfabriqués.

5. Procédé selon la revendication 1, caractérisé en ce que le matériau filtrant est constitué par une combinaison de panneaux préfabriqués et de matériau en vrac.

6. Procédé selon l'une des revendications 3 ou 5, caractérisé en ce qu'une feuille poreuse est interposée entre le matériau en vrac, d'une part, et les parois et le fond de la tranchée, d'autre part.

**Patentansprüche**

1. Verfahren zur Herstellung von Drainagerinnen, gemäss dem:

a) eine Rinne (1) in den Boden eingegraben wird, und

b) der Graben mit einem Filtermaterial (3) gefüllt wird,

dadurch gekennzeichnet, dass der Verfahrensschritt (a) ausgeführt wird, während der Graben mit einem pseudoplastischen, sich zersetzenden Schlamm (2) gefüllt ist, und dass danach der Verfahrensschritt (b) durch Einfüllen des Filtermaterials in den mit Schlamm gefüllten Graben ausgeführt wird.

2. Verfahren nach Anspruch 1, dadurch gekennzeichnet, dass vor dem Verfahrensschritt (b) auf dem Boden des Grabens (1) ein Sammel- und Drainagerohr (4) plaziert wird.

3. Verfahren nach Anspruch 1, dadurch gekennzeichnet, dass das Filtermaterial ein Schüttgut (3) ist.

4. Verfahren nach Anspruch 1, dadurch gekennzeichnet, dass das Filtermaterial aus vorgefertigten Platten besteht.

5. Verfahren nach Anspruch 1, dadurch gekennzeichnet, dass das Filtermaterial aus einer Kombination aus vorgefertigten Platten und Schüttgut (3) besteht.

6. Verfahren nach einem der beiden Ansprüche 3 oder 5, dadurch gekennzeichnet, dass zwischen das Schüttgut einerseits und die Wände und den Boden des Grabens andererseits eine poröse Folie eingelegt wird.

**Claims**

1. Process for providing drainage trenches according to which:

(a) a trench (1) is dug in the ground, and

(b) the trench is filled with a filtering material (3),

characterised in that step (a) is carried out whilst the trench is filled with a degradeable pseudoplastic slurry (2), then step (b) is carried out by introducing the filtering material into the trench filled with the slurry.

2. Process according to claim 1, characterised in that step (b) is preceded by the insertion, at the bottom of the trench (1), of a collecting and drainage pipe (4).

3. Process according to claim 1, characterised in that the filtering material is a bulk material (3).

4. Process according to claim 1, characterised in that the filtering material is made up by prefabricated panels.

7         **0 041 425**         8

5. Process according to claim 1, characterised in that the filtering material is made up by a combination of prefabricated panels and of material in bulk.

6. Process according to claim 3 or 5, characterised in that a porous sheet is inserted between, on the one hand, the material in bulk and, on the other hand, the walls and the base of the trench.

FIG.: 1

FIG.: 2